# EUROPEAN PATENT SPECIFICATION

(11) **EP 3 263 470 B1**
(45) Date of publication and mention of the grant of the patent: **07.11.2018**
(21) Application number: 16305772.2
(22) Date of filing: 27.06.2016
(51) Int. Cl.: B65C 9/18

(54) **LABELLING GROUP AND METHOD FOR APPLYING A PLURALITY OF LABELS ONTO RESPECTIVE ARTICLES**
ETIKETTIERGRUPPE UND VERFAHREN ZUM AUFBRINGEN EINER VIELZAHL VON ETIKETTEN AUF JEWEILIGE GEGENSTÄNDE
GROUPE D'ÉTIQUETAGE ET PROCÉDÉ POUR APPLIQUER UNE PLURALITÉ D'ÉTIQUETTES SUR DES ARTICLES RESPECTIFS

(43) Date of publication of application: 03.01.2018
(73) Proprietor: SIDEL PARTICIPATIONS, 76930 Octeville-sur-Mer (FR)
(72) Inventor: CARMICHAEL, James, 43126 Parma (IT); GIULIANI, Mattia, 43126 Parma (IT)
(74) Representative: Siloret, Patrick

(56) References cited:
- EP-A2- 0 641 717
- WO-A1-93/21071
- US-A- 5 380 381
- US-B1- 6 883 576

## Description

The present invention relates to a labelling group and to a method for applying a plurality of labels onto respective articles.

Labelling machines are known which substantially comprise a carousel for conveying articles to be labelled, e.g. containers filled with a pourable food product, and at least one labelling group for applying labels to relative containers advanced by the conveyor.

The above-indicated labelling machines are generally known as roll-fed labelling machines.

In detail, the labelling group substantially comprises:
- a shaft for rotatably supporting a reel off which a strip of labels is unwound and fed along a feed path;
- a plurality of unwinding rollers for unwinding the backing web along a rectilinear feed path;
- a motorized roll, which unwinds the strip of labels and determines the speed thereof;
- a cutter drum, which rotates about a first axis, is fed with the strip and outputs a sequence of cut single labels;
- a transfer drum, which rotates about a second axis, receives the cut single labels from the cutter drum at a transfer station and advances these cut labels; and
- a gluing drum for applying glue onto the each previously cut label, while the latter is advanced by the transfer drum.

In particular, the cutter drum drives in rotation a rotating blade and the labelling group comprises a stationary blade, which is fixed with respect to the rotating drive.

In this way, as it is advanced by the cutter drum, the strip of labels is gripped, at a predetermined angular position of the cutter drum, between the rotating blade and the stationary blade and is accordingly cut in the sequence of single labels.

Furthermore, the cut labels are retained on the transfer drum and on the cutter drum by means of the vacuum applied thereon.

In particular, after having been cut, two thirds of each label rests on the transfer drum and one third rests on the cutter drum.

Thus, each label is driven, after having been cut, by the transfer drum and accelerates from the speed determined by the motorized roll to the speed determined by the transfer drum.

The transfer drum comprises a number of divisions, i.e. of angularly spaced sectors along which the vacuum is applied. The number of divisions equals the number of labels which can be conveyed simultaneously by the transfer drum.

For example, a transfer drum with three divisions conveys three labels for each rotation while a transfer drum with two divisions conveys two labels for each rotation.

Thus, the higher is the number of the divisions, the lower is the maximum length of the labels that can be transferred and the higher is the rate at which labels can be applied onto respective articles.

In order to change the number of the divisions of the transfer drum, a different number of sectors with different angular lengths is mounted thereon.

The transfer drum and the cutter drum are rotated about respective first axis and second axis with respective first angular speed and second angular speed.

Still more precisely, the trajectories of the transfer drum about the first axis and the cutter drum about the second axis have a common tangent at the transfer station.

The first and second angular speeds are chosen in such a way that the tangential speed of the transfer drum is equal to the tangential speed of the cutter drum at the transfer station.

In this way, the single cut labels undergoes
substantial constant acceleration from the speed of the strip to the tangential speed of the transfer drum, when they are transferred from the vacuum drum to the cutter drum at the transfer station.

Known from WO93/21071A1 is a labelling group as defined in the preamble of claim 1 and a method as defined in the preamble of claim 9.

This transfer modality is normally known as homokinetic transfer.

An advantage connected with homokinetic transfer is that the risk that labels corrugate during the transfer is substantially reduced. This is due to the fact that the single cut labels undergo a substantially constant acceleration, as they are transferred form the cutter drum to the transfer drum.

Finally, the labels which have been cut and covered with glue are transferred to and applied onto the relative containers, which travel at a given rate corresponding to the output rate of the labelling machine.

Even if the known solutions perform well, they leave room for improvement.

It is desired in the art to use transfer drums with different number of divisions, e.g. to process labels of different length and/or to apply the labels at different speeds.

In the known solutions, in order to preserve the homokinetic transfer, this is possible only by changing the diameter of the transfer drum. This is due to the fact that the cutter drum conveys one label only for each revolution and the homokinetic transfer can be, therefore, achieves only if the circumference of the cutter drum equal the length of each division of the transfer drum.

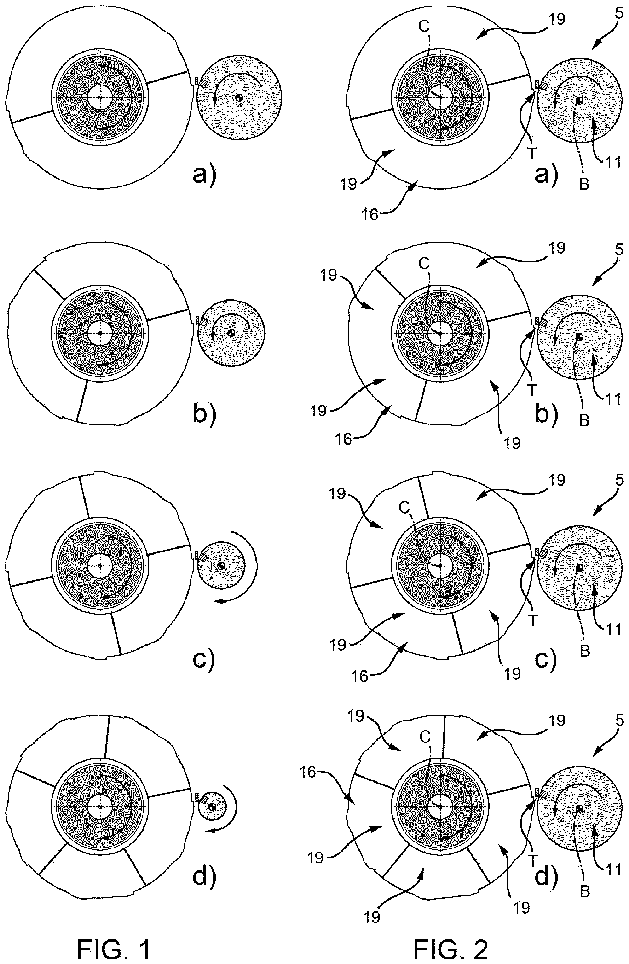

Accordingly, every time that it is required to vary the length or the speed of the labels to be transferred, it is necessary to remove the existing transfer drum from the labelling group and to install a new transfer drum with a different diameter on the same labelling group, as shown in Figure 1.

This operation is complex, time-consuming and requires the availability of a plurality of transfer drum with different diameters.

A need is therefore felt within the sector to use the same cutter drum with transfer drums, which have been provided with different number of divisions, in a simple, low time-consuming and economic way.

It is an object of the present invention to provide a labeling group which meets the above-identified requirement.

The aforementioned object is achieved by the present invention as it relates to a labelling group as claimed in claim 1.

The present invention also relates to a method for applying a plurality of labels to respective articles as claimed in claim 10.

One preferred embodiment is hereinafter disclosed for a better understanding of the present invention, by way of non-limitative example and with reference to the accompanying drawings, in which:
- Figure 1 is a schematic view of different configurations of a labelling group according to the known solution;
- Figure 2 is a schematic view of different configurations of a labelling group according to the invention;
- Figure 3 is a top view of a labelling machine comprising the labelling group of Figure 2, with parts removed for clarity;
- Figure 4 is a top view of the labelling machine of Figure 3; and
- Figures 5 to 9 show in a magnified scale subsequent respective steps of the operation of the labelling group of Figures 2 to 4.

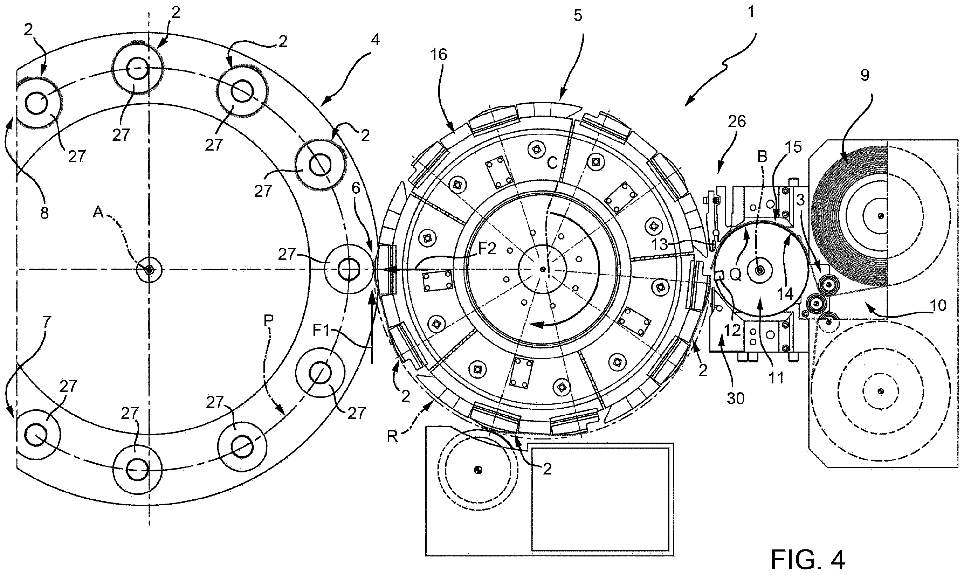

Number 1 in Figure 4 indicates as a whole a labelling machine for applying labels 2 to respective articles, containers 27 for pourable food product in the embodiment shown.

More precisely, labelling machine 1 substantially comprises:
- a carousel 4 which rotates about an axis A, vertical in the embodiment shown;
- a plurality of labelling groups 5, two in the embodiment shown, which apply, in use, a relative glued label 2 onto containers 27 conveyed by carousel 4 at respective affixing stations 6.

In detail, carousel 4 receives containers 27 to be labelled at an inlet station 7, conveys containers 27 along an arc-shaped path P having centre on axis A, and outputs labelled containers 27 at an output station 8.

Labelling groups 5 are angularly spaced relative to axis A.

Being understood that all labelling groups 5 are identical, only one labelling group 5 will be described hereinafter.

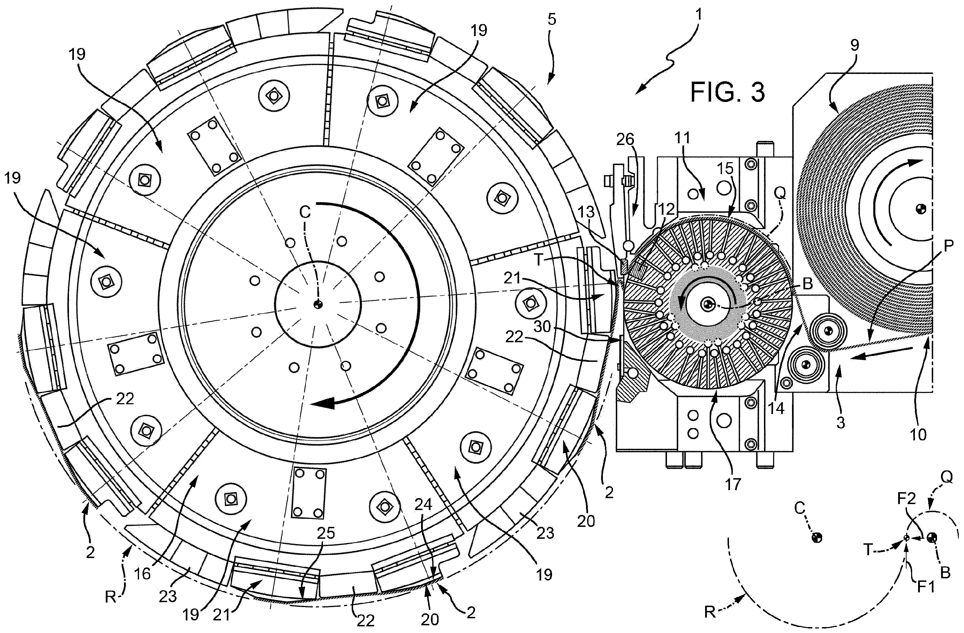

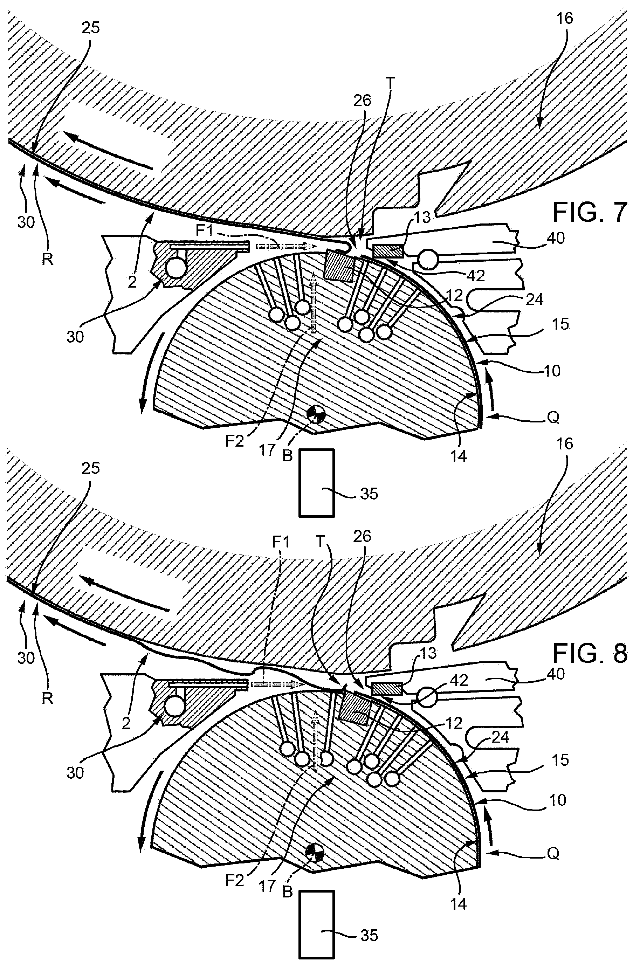

Labelling group 5 comprises (Figures 3 to 8):
- a shaft for rotatably supporting a reel 9 off which a strip 10 of labels 2 is unwound and fed along a feed path O towards relative affixing station 6;
- a plurality of not-shown unwinding rollers for unwinding the strip 10 of labels along rectilinear feed path P;
- a motorized roll 3, which advances strip 10 at a speed V3;
- a cutter drum 11, which is rotatable about an axis B and comprises, at its outer periphery, only one rotary blade 12 adapted to cooperate with a first side 14 of strip 10;
- a cutter 26 provided with a stationary blade 13, which is adapted to cooperate with a second side 15, opposite to first side 14, to cut labels 2 from strip 10 along a path Q;
- a transfer drum 16, which is fed by cutter drum 11 at a transfer station T with a sequence of cut labels 2 and rotates about an axis C to convey, one after the other, each cut labels 2 along a path R; and
- a gluing roll which is covered of glue and applies glue onto each cut label 2 travelling along path R.

Axes A, B and C are, in the embodiment parallel to one another and vertical.

Paths Q, R are arch-shaped and centred on axes B, C respectively.

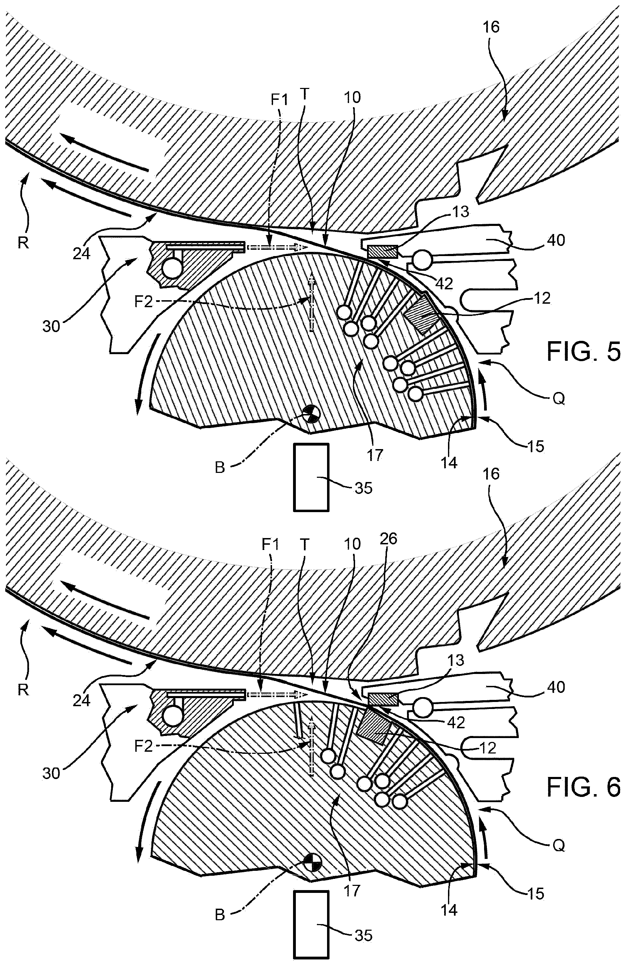

In detail, cutter drum 11 comprises a suction vacuum system 17 (only schematically shown in Figures 5 to 8), which can be operated to exert a negative pressure, i.e. a suction action, on strips 10 and cut labels 2, so as to retain it on cutter drum 11.

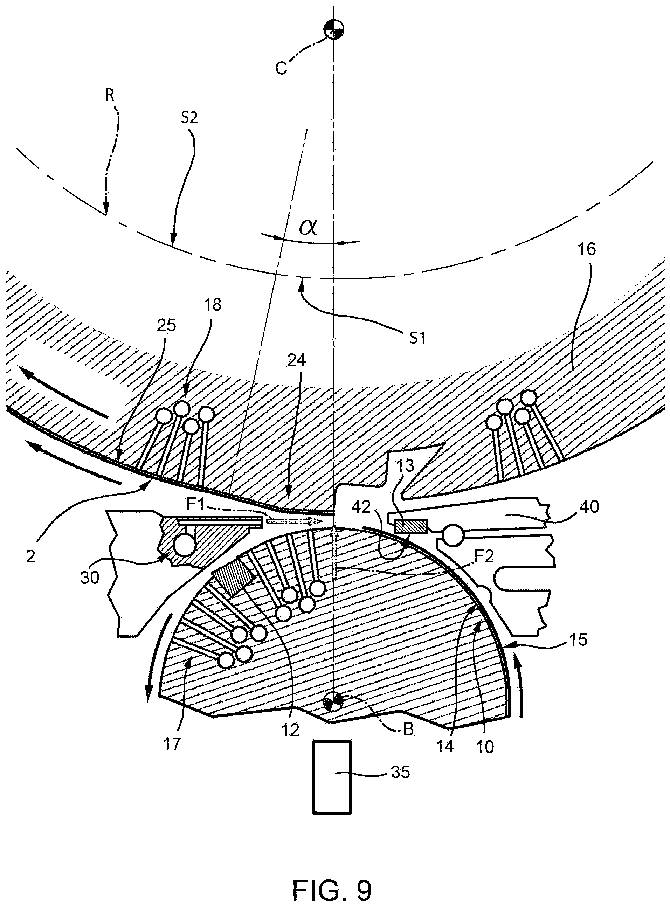

More precisely, the suction action is exerted along path Q, so as to convey strip 10 of labels 2 along path Q, and is released at transfer station T to allow cut labels 2 to be transferred to transfer drum 16. Transfer drum 16 comprises a suction vacuum system 18 (only schematically shown in Figure 9), which can be operated to exert a negative pressure, i.e. a suction action, on cut labels 2, so as to retain them on transfer drum 16.

Transfer drum 16 comprises a plurality of divisions 19, which correspond to the number of labels 2 that transfer drum 16 can simultaneously convey along path Q.

In particular, the higher the number of divisions, the lower the length of labels 2 that are simultaneously transferred by transfer drum 16.

With reference to Figure 3, transfer drum 16 comprises, for each division 19, a pair of angularly offset front pad 20 and back pad 21, an inter-pad segment 22 which extends between pads 20 and 21, and a sliding segment 23 which is arranged upstream of pad 20 proceeding according to the advancing direction of transfer drum 16 about axis C.

The number of division of transfer drum 16 can be changed by varying the number of pads 20, 21 and segments 22, 23.

Vacuum system 18 exerts action at pads 20, 21 and inter-pad segment 22 and is not exerted at sliding segment 23.

The outer surface of cutter drum 11 and transfer drum 16, move at transfer station T respectively with tangential speeds V1 and V2.

In the embodiment shown, tangential speeds V1, V2 substantially equal the product of the radius and the rotational speed of cutter drum 11 and transfer drum 16 respectively about respective axes B, C.

When each label 2 is cut by the interaction between rotary blade 12 and stationary blade 13, a front portion 25 of each label 2 rests on transfer drum 16 and a rear portion 24 of each label 2 rests on cutter drum 11.

In the embodiment shown, front portion 25 equals two thirds of the length of label 2 while rear portion 24 equals the remaining one third of the length of label 2.

Due to the fact that relative front portion 25 rests on transfer drum 16, each label 2 is accelerated from speed V3 to speed V1 when it is cut from the remaining part of strip 10.

Advantageously, tangential speed V1 is different from tangential speed V2 and is chosen on the basis of the number of single cut labels 2 simultaneously conveyed on transfer drum 16, i.e. on the basis of the number of divisions 19.

In other words, the transfer of label 2 from cutter drum 11 and transfer drum 16 is not homokinetic.

In this way, it is no longer necessary to change the whole cutter drum 11 when the number of divisions 19 changes, but it is enough to correspondingly adjust speed V1 of cutter drum 11.

In greater detail, cutter drums 11 of the same diameter can be used for transferring cut and single labels 2 to transfer drum 16.

As a matter of fact, being the transfer not homokinetic, the length of the outer circumference of cutter drum 11 can be different from the length of the arc of circumference of each division 19.

In one embodiment, tangential speed V1 is greater than tangential speed V2. This condition is indicated as "overspeed transfer".

In this embodiment, during transfer from cutter drum 11 to transfer drum 16, rear portion 24 resting on cutter drum 11 is accelerated towards front portion 25 resting on cutter drum 11.

In another embodiment, tangential speed V1 is smaller than tangential speed V2. This condition is indicated as "underspeed transfer".

In this embodiment, during transfer from cutter drum 11 to transfer drum 16, front portion 24 resting on cutter drum 11 is accelerated away from rear portion 25 resting on cutter drum 11.

In both the embodiments, the higher is the tangential speed V1, the higher is the number of divisions 19 on transfer drum 16.

Furthermore, when the number of divisions 19 is smaller than a threshold value, first tangential speed V1 is smaller than tangential speed V2. On the contrary, when the number of divisions 19 is higher than the threshold value, tangential speed V1 is higher than tangential speed V2.

In both the embodiments, tangential speed V2 is greater than speed V3.

Furthermore, labelling group 5 comprises blowing means 30, which are configured to blow an air flow F1 onto single cut labels 2 instantaneously travelling at station T.

Airflow F1 is directed tangentially to path Q, R, towards transfer station and in the opposite sense of tangential speed V1, V2.

Labelling group 5 also comprises blowing means 35 configured to blow an airflow F2 onto single cut labels 2 instantaneously travelling at station T.

Airflow F2 is directed radially to path Q, R and axes B, C and towards station T.

In particular, airflow F2 is directed from cutter drum 11 to transfer drum 16.

Stationary cutter 26 comprises:
- a frame 40, which extends in the in the zone between cutter drum 11 and transfer drum 16 and is elongated substantially tangential to paths Q, R; and
- blade 13, which extends substantially up to and as close as possible to transfer point T.

Blade 13 comprises a cutting edge 42, which extends transversal, orthogonally in the embodiment shown, with respect to axis B, C.

Cutting edge 42 which extends substantially up to and as close as possible to transfer point T.

Vacuum system 18 is controlled (Figure 9) in such a way that the suction action is inhibited along an arch-shaped portion S1 of path R starting as of transfer station T at is exerted along an arch-shaped portion S2, which is arranged downstream of portion S1 proceeding according to the advancing direction of single cut labels 2 and transfer drum 16 along path Q.

Portion S1 correspond to the arch starting as of transfer station T and having an angular extension defined by angle α centred in axis C.

As a result, starting from the time at which each division 19 reaches transfer station T,:
- the vacuum action is inhibited at back pad 21 and in a portion of inter-pad segment 22 adjacent to back pad 21 for a certain time interval; and
- the vacuum action is then exerted after the lapse of the time interval.

In use, carousel 4 is fed with containers to be labelled at inlet station 7 and rotates about axis A so as to convey containers 27 to be labelled along path P and up to output station 8.

In the following of the present description, reference is made to only one labelling group 5 and to only one cut label 2.

On the basis of the length of label 2 and/or rate of labelling machine 1, a given number of divisions 19 is applied on transfer drum 16.

Transfer drum 16 advances at tangential speed V2 at its outer periphery and cutter drum 11 advances at tangential speed V1 at is outer periphery. Tangential speed V1 is chosen on the basis of the number of divisions 19 applied on cutter drum 11.

In detail, strip 10 is unwound off reel 9 and fed along path Q by motorized roll 3 at speed V3.

Strip 10 winds on cutter drum 11, is retained by the vacuum action on cutter drum 11, and advances along path Q.

The interaction between rotary blade 12 and stationary blade 13 cuts label 2 to the desired length in a position as close as possible to transfer station T.

Transfer drum 16 rotates about axis C, receives cut label 2 and transfer it, thanks to the suction action, from cutting drum 11 to gluing roll.

As of when label 2 has been cut, front portion 24 rests on transfer drum 16 and rear portion 25 rests on cutter drum 11. Thus, front portion 24 of label 2 is accelerated from speed V3 to speed V2 and rear portion 25 of label 2 is accelerated from speed V3 to speed V1, thus generating a tension or a compression in label 2.

Air flows F1, F2 impinge on label 2 instantaneously travelling at station T, thus containing the risk that label 2 corrugates or stretches due to the sudden differential variation in speed.

The suction action on transfer drum 16 is inhibited along portion S1 and is exerted along portion S2. Thus, starting from the time at which each division 19 reaches transfer station T,:
- the vacuum action is inhibited at back pad 21 and in a portion of inter-pad segment 22 adjacent to back pad 21 for a certain time interval; and
- the vacuum action is then exerted after the lapse of the time interval.

Transfer drum 16 transfers single cut label 2 to gluing roll, downstream of which glued label 2 is transferred to the affixing station 6 where it is applied to a relative container 3.

Finally, carousel 4 outputs labelled containers 27 at output station 8.

When it is necessary to change the number of divisions 19 of transfer drum 16, e.g. for varying the length of label 2 and/or the rate of labelling machine 1, tangential speed V1 is correspondingly adjusted.

In particular, the higher the required number of divisions 19, the higher tangential speed V1.

Thus, "underspeed" transfer is normally carried out with low number of divisions 19 while the "overspeed" transfer is carried out with high number of divisions 19.

From an analysis of the features of labelling group 5 and of the method according to the present invention, the advantages it allows to obtain are apparent.

In particular, tangential speed V1 is different from tangential speed V2 and is adjusted on the basis of the required number of divisions 19 of transfer drum 16.

In this way, labelling group 5 does not carry out a homokinetic transfer of single cut labels 2 between cutter drum 11 and transfer drum 16, differently from the known solutions described in the introductory part of the present description.

It is therefore possible to use the same cutter drum 11 having the same outer diameter with transfer drums 16 having different number of divisions 19.

Thus, it is possible to convey labels 2 having different lengths and/or with particularly high speed in a very simple, fast and economic way, especially in comparison with the known solution described in the introductory part of the present description.

Air flows F1, F2 impinge on label 2 instantaneously travelling at station T, thus effectively containing the risk that cut labels 2 corrugate due to the differential acceleration between front portion 24 resting on transfer drum 16 - and, therefore, accelerated from tangential speed V3 to tangential speed V2 - and rear portion 25 resting on cutter drum 11 - and, therefore, accelerates from tangential speed V3 to tangential speed V1 -.

The risk that cut labels 2 corrugate at transfer station T is also substantially contained by the fact that the vacuum action is inhibited along portion S1 of path Q, i.e. in a time interval immediately subsequent to the transfer of labels 2 to transfer drum 16.

Finally, it is apparent that modifications and variants not departing from the scope of protection of the claims may be made to labelling group 5 and to the method for applying labels 2 onto relative articles.

## Claims

1. A labelling group (5) for advancing a series of labels (2) to be applied onto relative articles (27), comprising:
- a first drum (11), which is adapted to convey a strip (10) of labels (2) along a first path (Q) and towards a transfer station (T);
- cutting means (12, 13), which are adapted to cut a sequence of said single labels (2) from said strip (10); and
- a second drum (16), which is fed, in use, by said first drum (11) with said cut single labels (2) at said transfer station (T) and which is adapted to convey simultaneously a required number of said cut single labels (2) along a second path (R);
said first drum (11) moving, in use, at a first tangential speed (V1) at said transfer station (T);
said second drum (16) moving, in use, at a second tangential speed (V2) at said transfer station (T);
wherein said first tangential speed (V1) is different from said second tangential speed (V2);
and **characterized in that** said first tangential speed (v1) is adjusted, in use, on the basis of said required number of said cut labels (2) to be simultaneously conveyed on said second drum (16).

2. The labelling group of claim 1, **characterized by** comprising first blowing means (30), which are configured to blow a first air flow (F1) onto said label (2) travelling at said transfer station (T); said first air flow (F1) being directed tangentially to said first and second path (Q, R) and at said transfer station (T).

3. The labelling group of claim 2, **characterized in that** said first blowing means (30) are configured to blow said first air flow (F1) in the opposite direction of said first tangential speed (V1) and said second tangential speed (V2) at said transfer station (T).

4. The labelling group of any one of the foregoing claims, **characterized by** comprising second blowing means (35), which are configured to blow a second air flow (F2) onto said cut label (2) travelling at said transfer station (T); said second air flow (F2) being directed radially to said first and second path (P, Q) and at said transfer station (T).

5. The labelling group of claim 4, **characterized in that** said second blowing means (35) are configured to blow said second airflow (F2) from said first drum (11) towards said second drum (16).

6. The labelling group of any one of the foregoing claims, **characterized in that** said cutting means (12, 13) comprise a stationary blade (13) and only one rotary blade (12) carried by said first drum (11); said stationary blade (13) and rotary blade (12) cooperating with opposite sides (14, 15) of said labels (2) to cut them from said strip (10);
said stationary blade (13) extending between said first and second drum (11, 16) along a direction transversal to said first and second path (Q, R) and substantially at said transfer point (T).

7. The labelling group of any one of the foregoing claims, **characterized in that** said second drum (16) comprises vacuum suction means (18) which are configured to exert a suction action on said cut labels (2) to retain them on said second drum (16);
said suction action being inhibited along a first portion (S1) of said path (Q) starting from said transfer station (T) and being exerted along a second portion (S2) of said second path (Q);
said second portion (S2) being arranged downstream of said first portion (S1), proceeding along said second path (Q) according to the advancing direction of said second drum (16).

8. -A labelling machine (1), comprising:
- a conveyor (4) for conveying a plurality of articles; and
- a labelling group (5) according to any one of the foregoing claims;
said labelling group (5) further comprising a gluing element, which applies, in use, glue onto said cut label (2) and is fed, in use, with said label (2) by said second drum (16).

9. -A method for applying a plurality of labels (2) to respective articles (27), comprising the steps of:
i) conveying a strip of labels (2) along a first path (Q) by means of a first drum (11);
ii) cutting said strip (10) to form a sequence of single cut labels (2), as said strip (10) is advanced along said first path (Q);
iii) receiving single said cut labels (2) by means of a second drum (16) at a transfer station (T);
iv) simultaneously conveying a required number of said single cut labels (2) by means of said second drum (16) along a second path (R);
**characterized by** comprising the steps of:
v) selecting said required number of said single cut labels (2) to be simultaneously conveyed on said second drum (16);
vi) advancing said first drum (11) with a first tangential speed (V1) at said transfer station (T); and
vii) advancing said second drum (16) with a second tangential speed (V2) at said transfer station (T);
said first tangential speed (V1) being different from said second tangential speed (V2) and being adjusted on the basis of said required number of said single labels (2) to be simultaneously conveyed.

10. The method of claim 9, **characterized by** comprising the steps of:
viii) exerting a suction action on said cut single labels (2) to retain them on said second drum (16); said step viii) comprising the steps of:
ix) inhibiting said suction action along a first portion (S1) of said path (Q) starting from said transfer station (T); and
x) exerting said suction along a second portion (S2) of said path (Q);
said second portion (S2) being arranged downstream of said first portion (S1), proceeding along said second path (Q) according to the advancing direction of said second drum (16).

11. -The method of any one of claims 9 or 10, **characterized by** comprising the step xi) of blowing a first air flow tangential to said first and said second path (P, Q) at said transfer station (T).

12. The method of claim 11, **characterized in that** said step xi) comprises a step xii) of blowing said first air flow (F1) in the opposite direction with respect to said first and second tangential speed (V1, V2) at said transfer station (T).

13. The method of claim 11 or 12, **characterized by** comprising the step xiii) of blowing a second air flow radially (F2) to said first and second path (P, Q) at said transfer station (T).

## Patentansprüche

1. Etikettiergruppe (5) zum Vorrücken einer Serie von Etiketten (2), die auf jeweilige Gegenstände (27) aufzubringen sind, aufweisend:
- eine erste Walze (11), die dafür ausgelegt ist, einen Streifen (10) von Etiketten (2) entlang einer ersten Bahn (Q) und zu einer Übernahmestation (T) zu transportieren;
- Schneidemittel (12, 13), die dafür ausgelegt sind, eine Abfolge der Einzeletiketten (2) vom Streifen (10) abzuschneiden; und
- eine zweite Walze (16), die im Gebrauch durch die erste Walze (11) an der Übernahmestation (T) mit den abgeschnittenen Einzeletiketten (2) beschickt wird, und die dafür ausgelegt ist, eine erforderliche Anzahl der abgeschnittenen Einzeletiketten (2) gleichzeitig entlang einer zweiten Bahn (R) zu transportieren;
wobei sich die erste Walze (11) im Gebrauch an der Übernahmestation (T) mit einer ersten Tangentialgeschwindigkeit (V1) bewegt;
die zweite Walze (16) im Gebrauch an der Übernahmestation (T) mit einer zweiten Tangentialgeschwindigkeit (V2) bewegt;
wobei sich die erste Tangentialgeschwindigkeit (V1) von der zweiten Tangentialgeschwindigkeit (V2) unterscheidet;
und **dadurch gekennzeichnet, dass** die erste Tangentialgeschwindigkeit (V1) im Gebrauch auf Grundlage der erforderlichen Anzahl abgeschnittener Etiketten (2), die gleichzeitig auf der zweiten Walze (16) zu transportieren sind, eingestellt ist.

2. Etikettiergruppe nach Anspruch 1 **dadurch gekennzeichnet, dass** sie erste Blasmittel (30) aufweist, die derart ausgelegt sind, dass sie einen ersten Luftstrom (F1) auf das Etikett (2), das sich an der Übernahmestation (T) bewegt blasen; wobei der erste Luftstrom (F1) tangential zur ersten und zweiten Bahn (Q, R) und auf die Übernahmestation (T) ausgerichtet ist.

3. Etikettiergruppe nach Anspruch 2, **dadurch gekennzeichnet, dass** die ersten Blasmittel (30) derart ausgelegt sind, dass sie den ersten Luftstrom (F1) in die entgegengesetzte Richtung der ersten Tangentialgeschwindigkeit (V1) und der zweiten Tangentialgeschwindigkeit (V2) auf die Übernahmestation (T) blasen.

4. Etikettiergruppe nach einem der vorstehenden Ansprüche, **dadurch gekennzeichnet, dass** sie zweite Blasmittel (35) aufweist, die derart ausgelegt sind, dass sie einen zweiten Luftstrom (F2) auf das abgeschnittene Etikett (2), das sich an der Übernahmestation (T) bewegt blasen; wobei der zweite Luftstrom (F2) radial zur ersten und zweiten Bahn (P, Q) und auf die Übernahmestation (T) ausgerichtet ist.

5. Etikettiergruppe nach Anspruch 4, **dadurch gekennzeichnet, dass** die zweiten Blasmittel (35) dafür ausgelegt sind, den zweiten Luftstrom (F2) von der ersten Walze (11) zur zweiten Walze (16) hin zu blasen.

6. Etikettiergruppe nach einem der vorstehenden Ansprüche, **dadurch gekennzeichnet, dass** die Schneidemittel (12, 13) eine feststehende Klinge (13) und nur eine Drehklinge (12) getragen von der ersten Walze (11) aufweisen; wobei die feststehende Klinge (13) und die Drehklinge (12) mit gegenüberliegenden Seiten (14, 15) der Etiketten (2) zusammenwirken, um diese vom Streifen (10) abzuschneiden;
wobei sich die feststehende Klinge (13) zwischen der ersten und der zweiten Walze (11, 16) entlang einer Richtung quer zur ersten und zweiten Bahn (Q, R) und im Wesentlichen am Übernahmepunkt (T) erstreckt.

7. Etikettiergruppe nach einem der vorstehenden Ansprüche, **dadurch gekennzeichnet, dass** die zweite Walze (16) Vakuumansaugmittel (18) aufweist, die dafür ausgelegt sind, eine Saugwirkung auf die abgeschnittenen Etiketten (2) auszuüben, um diese an der zweiten Walze (16) zu halten;
wobei die Saugwirkung entlang eines ersten Abschnitts (S1) der Bahn (Q) beginnend von der Übernahmestation (T) unterdrückt, und entlang eines zweiten Abschnitts (S2) der zweiten Bahn (Q) ausgeübt wird;
wobei der zweite Abschnitt (S2) dem ersten Abschnitt (S1) nachgeschaltet angeordnet ist, und entlang der zweiten Bahn (Q) gemäß der Bewegungsrichtung der zweiten Walze (16) vorrückt.

8. Etikettiermaschine (1), aufweisend:
- eine Fördervorrichtung (4) zum Befördern einer Mehrzahl von Gegenständen; und
- eine Etikettiergruppe (5) gemäß einem der vorstehenden Ansprüche;
die Etikettiergruppe (5) ferner aufweisend ein Verklebungselement, das im Gebrauch Klebstoff auf das abgeschnittene Etikett (2) aufbringt, und im Gebrauch durch die zweite Walze (16) mit dem Etikett (2) beschickt wird.

9. Verfahren zum Aufbringen einer Mehrzahl von Etiketten (2) auf jeweilige Gegenstände (27), aufweisend die Schritte:
i) Transportieren eines Streifens von Etiketten (2) entlang einer ersten Bahn (Q) mittels einer ersten Walze (11) ;
ii) Abschneiden des Streifens (10) zum Bilden einer Abfolge von abgeschnittenen Einzeletiketten (2), während der Streifen (10) entlang der ersten Bahn (Q) weiterbefördert wird;
iii) Empfangen abgeschnittener Einzeletiketten (2) mittels einer zweiten Walze (16) an einer Übernahmestation (T);
iv) gleichzeitiges Vorrücken einer erforderlichen Anzahl abgeschnittener Einzeletiketten (2) mittels der zweiten Walze (16) entlang einer zweiten Bahn (R); **dadurch gekennzeichnet, dass** das Verfahren die folgenden Schritte aufweist:
v) Auswählen der erforderlichen Anzahl abgeschnittener Einzeletiketten (2), die gleichzeitig auf der zweiten Walze (16) vorzurücken sind;
vi) Vorrücken der ersten Walze (11) an der Übernahmestation (T) mit einer ersten Tangentialgeschwindigkeit (V1); und
vii) Vorrücken der zweiten Walze (16) an der Übernahmestation (T) mit einer zweiten Tangentialgeschwindigkeit (V2);
wobei sich die erste Tangentialgeschwindigkeit (V1) von der zweiten Tangentialgeschwindigkeit (V2) unterscheidet und auf Grundlage der erforderlichen Anzahl von Einzeletiketten (2), die gleichzeitig vorzurücken sind, eingestellt ist.

10. Verfahren nach Anspruch 9, **dadurch gekennzeichnet, dass** das Verfahren die folgenden Schritte aufweist:
viii) Ausüben einer Saugwirkung auf die abgeschnittenen Einzeletiketten (2), um diese an der zweiten Walze (16) zu halten;
der Schritt viii) aufweisend die Schritte:
ix) Unterdrücken der Saugwirkung entlang eines ersten Abschnitts (S1) der Bahn (Q) beginnend von der Übernahmestation (T); und
x) Ausüben der Saugwirkung entlang eines zweiten Abschnitts (S2) der Bahn (Q);
wobei der zweite Abschnitt (S2) dem ersten Abschnitt (S1) nachgeschaltet angeordnet ist, und entlang der zweiten Bahn (Q) gemäß der Bewegungsrichtung der zweiten Walze (16) vorrückt.

11. Verfahren nach einem der Ansprüche 9 oder 10, **dadurch gekennzeichnet, dass** das Verfahren den Schritt xi) Blasen eines ersten Luftstroms tangential zur ersten und zweiten Bahn (P, Q) auf die Übernahmestation (T) aufweist.

12. Verfahren nach Anspruch 11, **dadurch gekennzeichnet, dass** der Schritt xi) einen Schritt xii) Blasen des ersten Luftstroms (F1) in der entgegengesetzten Richtung in Bezug auf die erste und zweite Tangentialgeschwindigkeit (V1, V2) auf die Übernahmestation (T) aufweist.

13. Verfahren nach Anspruch 11 oder 12, **dadurch gekennzeichnet, dass** das Verfahren den Schritt xiii) Blasen eines zweiten Luftstroms (F2) radial zur ersten und zweiten Bahn (P, Q) auf die Übernahmestation (T) aufweist.

## Revendications

1. Groupe d'étiquetage (5) pour faire avancer une série d'étiquettes (2) qui doivent être appliquées sur des articles relatifs (27), comprenant :
- un premier tambour (11) qui est conçu pour transporter une bande (10) d'étiquettes (2) le long d'un premier trajet (Q) et vers un poste de transfert (T) ;
- des moyens de coupe (12, 13) qui sont conçus pour découper une séquence desdites étiquettes uniques (2) de ladite bande (10) ; et
- un second tambour (16) qui est alimenté, lors de l'utilisation, par ledit premier tambour (11) avec lesdites étiquettes uniques découpées (2) au niveau dudit poste de transfert (T) et qui est conçu pour transporter en même temps un nombre requis desdites étiquettes uniques découpées (2) le long d'un second trajet (R) ;
ledit premier tambour (11) se déplaçant, lors de l'utilisation, à une première vitesse tangentielle (V1) dans la direction dudit poste de transfert (T) ;
ledit second tambour (16) se déplaçant, lors de l'utilisation, à une seconde vitesse tangentielle (V2) dans la direction dudit poste de transfert (T) ;
dans lequel ladite première vitesse tangentielle (V1) est différente de ladite seconde vitesse tangentielle (V2) ;
et **caractérisé en ce que** la première vitesse tangentielle (v1) est ajustée, lors de l'utilisation, sur la base dudit nombre requis desdites étiquettes découpées (2) qui doivent être transportées en même temps sur ledit second tambour (16).

2. Groupe d'étiquetage selon la revendication 1, **caractérisé en ce qu'**il comprend des premiers moyens de soufflage (30) qui sont configurés pour souffler un premier flux d'air (F1) sur ladite étiquette (2) se déplaçant dans la direction du dit poste de transfert (T) ; ledit premier flux d'air (F1) étant dirigé de manière tangentielle vers ledit premier et ledit second trajet (Q, R) et dans la direction dudit poste de transfert (T).

3. Groupe d'étiquetage selon la revendication 2, **caractérisé en ce que** lesdits premiers moyens de soufflage (30) sont configurés pour souffler ledit premier flux d'air (F1) dans la direction opposée de ladite première vitesse tangentielle (V1) et de ladite seconde vitesse tangentielle (V2) dans la direction dudit poste de transfert (T).

4. Groupe d'étiquetage selon l'une quelconque des revendications précédentes, **caractérisé en ce qu'**il comprend des seconds moyens de soufflage (35) qui sont configurés pour souffler un second flux d'air (F2) sur ladite étiquette découpée (2) se déplaçant jusqu'au dit poste de transfert (T) ; ledit second flux d'air (F2) étant dirigé de manière radiale vers ledit premier et ledit second trajet (P, Q) et dans la direction dudit poste de transfert (T).

5. Groupe d'étiquetage selon la revendication 4, **caractérisé en ce que** lesdits seconds moyens de soufflage (35) sont configurés pour souffler ledit second flux d'air (F2) depuis ledit premier tambour (11) vers ledit second tambour (16).

6. Groupe d'étiquetage selon l'une quelconque des revendications précédentes, **caractérisé en ce que** lesdits moyens de coupe (12, 13) comprennent une lame fixe (13) et une seule lame rotative (12) supportées par ledit premier tambour (11) ; ladite lame fixe (13) et ladite lame rotative (12) coopérant avec des côtés opposés (14, 15) desdites étiquettes (2) pour les découper de ladite bande (10) ;
ladite lame fixe (13) s'étendant entre ledit premier et ledit second tambour (11, 16) dans une direction transversale au dit premier et audit second trajet (Q, R) et sensiblement dans la direction dudit point de transfert (T) .

7. Groupe d'étiquetage selon l'une quelconque des revendications précédentes, **caractérisé en ce que** ledit second tambour (16) comprend des moyens d'aspiration sous vide (18) qui sont configurés pour exercer une action d'aspiration sur lesdites étiquettes découpées (2) pour les retenir sur ledit second tambour (16) ;
ladite action d'aspiration étant entravée le long d'une première partie (S1) dudit trajet (Q) commençant depuis ledit poste de transfert (T) et étant exercée le long d'une seconde partie (S2) dudit second trajet (Q) ;
ladite seconde partie (S2) étant disposée en aval de ladite première partie (S1), continuant le long dudit second trajet (Q) en fonction de la direction d'avancement dudit second tambour (16).

8. Machine à étiqueter (1) comprenant :
- un convoyeur (4) pour transporter une pluralité d'articles ; et
- un groupe d'étiquetage (5) selon l'une quelconque des revendications précédentes ;
ledit groupe d'étiquetage (5) comprenant en outre un élément de collage, qui applique, lors de l'utilisation, de la colle sur ladite étiquette découpée (2) et qui est alimenté, lors de l'utilisation, avec ladite étiquette (2) par ledit second tambour (16).

9. Procédé pour appliquer une pluralité d'étiquettes (2) à des articles respectifs (27), comprenant les étapes consistant à :
i) transporter une bande d'étiquettes (2) le long d'un premier trajet (Q) au moyen d'un premier tambour (11) ;
ii) découper ladite bande (10) pour former une séquence d'étiquettes uniques découpées (2) au fur et à mesure que ladite bande (10) est avancée le long dudit premier trajet (Q) ;
iii) recevoir lesdites étiquettes uniques découpées (2) au moyen d'un second tambour (16) au niveau d'un poste de transfert (T) ;
iv) transporter en même temps un nombre requis desdites étiquettes uniques découpées (2) au moyen dudit second tambour (16) le long d'un second trajet (R) ;
**caractérisé en ce qu'**il comprend les étapes consistant :
v) sélectionner ledit nombre requis desdites étiquettes uniques découpées (2) qui doivent être transportées en même temps sur ledit second tambour (16) ;
vi) faire avancer ledit premier tambour (11) avec une première vitesse tangentielle (V1) dans la direction dudit poste de transfert (T) ; et
vii) faire avancer ledit second tambour (16) avec une seconde vitesse tangentielle (V2) dans la direction dudit poste de transfert (T) ;
ladite première vitesse tangentielle (V1) étant différente de ladite seconde vitesse tangentielle (V2) et étant ajustée sur la base dudit nombre requis desdites étiquettes uniques (2) qui doivent être transportées en même temps.

10. Procédé selon la revendication 9, **caractérisé en ce qu'**il comprend les étapes consistant à :
viii) exercer une action d'aspiration sur lesdites étiquettes uniques découpées (2) pour les retenir sur ledit second tambour (16) ;
ladite étape viii) comprenant les étapes consistant à :
ix) entraver ladite action d'aspiration le long d'une première partie (S1) dudit trajet (Q) commençant depuis ledit poste de transfert (T) ; et
x) exercer ladite aspiration le long d'une seconde partie (S2) dudit trajet (Q) ;
ladite seconde partie (S2) étant disposée en aval de ladite première partie (S1), continuant le long dudit second trajet (Q) en fonction de la direction d'avancement dudit second tambour (16).

11. Procédé selon l'une quelconque des revendications 9 ou 10, **caractérisé en ce qu'**il comprend l'étape xi) consistant à souffler un premier flux d'air de manière tangentielle au dit premier et audit second trajet (P, Q) dans la direction dudit poste de transfert (T).

12. Procédé selon la revendication 11, **caractérisé en ce que** ladite étape xi) comprend une étape xii) consistant à souffler ledit premier flux d'air (F1) dans la direction opposée par rapport à ladite première et à ladite seconde vitesse tangentielle (V1, V2) dans la direction dudit poste de transfert (T).

13. Procédé selon la revendication 11 ou 12, **caractérisé en ce qu'**il comprend l'étape xiii) consistant à souffler un second flux d'air (F2) de façon radiale audit premier et audit second trajet (P, Q) dans la direction dudit poste de transfert (T).
